# EUROPEAN PATENT APPLICATION

(11) **EP 4 836 098 A1**
(43) Date of publication of application: **04.11.2026**
(21) Application number: 25918821.7
(22) Date of filing: 24.12.2025
(51) Int. Cl.: H01M 10/658, H01M 50/507, H01M 50/503, H01M 50/514, H01M 50/211, H01M 50/178

(54) **BATTERY CELL UNIT AND METHOD FOR MANUFACTURING BATTERY CELL UNIT**

(30) Priority: 07.01.2025 KR 20250002147
(71) Applicant: LG Energy Solution, Ltd., Seoul 07335 (KR)
(72) Inventor: CHANG, Hyuk Kyun, Daejeon 34122 (KR); KIM, Soo Youl, Daejeon 34122 (KR)
(74) Representative: BCKIP Part mbB
(86) International application number: PCT/KR2025/022715
(87) International publication number: WO 2026/151121

(57) **Abstract**

The present disclosure provides a battery cell unit including: a cell stack assembly including a plurality of pouch-type cells stacked on top of each other, wherein a thermal barrier member is provided in all or part of spaces between the plurality of pouch-type cells; and a busbar frame including a protruding part on a rear part thereof, wherein the protruding part is inserted into a terrace part of the cell stack assembly.

## Description

### [Technical Field]

The present disclosure relates to a battery cell unit and a method for manufacturing a battery cell unit, and more particularly, to a battery cell unit and a method for manufacturing a battery cell unit capable of delaying thermal runaway or thermal propagation.

This application claims the benefit of Korean Patent Application No. 10-2025-0002147, filed on January 7, 2025, the disclosure of which is incorporated herein by reference.

### [Background]

Unlike primary batteries, secondary batteries are capable of being charged and discharged a plurality of times. Secondary batteries are widely used as an energy source for various wireless devices such as handsets, laptops, and cordless vacuum cleaners. Recently, due to improvements in energy density and economies of scale, the manufacturing cost per unit capacity of secondary batteries has dramatically decreased, and as the driving range of battery electric vehicles (BEVs) has increased to a level equivalent to that of internal combustion engine vehicles, the main application of secondary batteries is shifting from mobile devices to mobility.

Since secondary batteries are required to be continuously used for a long period of time, it is necessary to effectively control the heat generated during the charging and discharging processes. If cooling of the secondary battery is not performed smoothly, a rise in temperature may cause an increase in current, and the increase in current may in turn cause a further rise in temperature, resulting in a chain reaction. As a result, the secondary battery may reach a state of thermal runaway.

When secondary batteries are grouped in the form of a module or a pack, thermal propagation may occur in which other surrounding secondary batteries are continuously overheated by thermal runaway occurring in any one of the secondary batteries. Furthermore, flammable gases released from the overheated secondary batteries and heated electrodes may serve as ignition sources, posing a risk of fire. Accordingly, various studies are being conducted to reduce the risk of ignition of secondary batteries.

### [Summary]

### [Technical Problem]

A first technical object of the present disclosure is to provide a battery cell unit capable of delaying thermal runaway or thermal propagation.

A second technical object of the present disclosure is to provide a method for manufacturing a battery cell unit capable of delaying thermal runaway or thermal propagation.

### [Technical Solution]

In order to achieve the first technical object, the present disclosure provides a battery cell unit including: a cell stack assembly including a plurality of pouch-type cells stacked on top of each other, wherein a thermal barrier member is provided in all or part of spaces between the plurality of pouch-type cells; and a busbar frame including a protruding part on a rear part thereof, wherein the protruding part is inserted into a terrace part of the cell stack assembly.

In some embodiments, the protruding part may include a first-type protruding part and a second-type protruding part adjacent to the first-type protruding part and having a different shape from the first-type protruding part.

In some embodiments, the battery cell unit may further include: a lead part through-slot penetrating from a rear part toward a front part of the busbar frame between the first-type protruding part and the second-type protruding part such that a lead part of the cell stack assembly penetrates.

In some embodiments, the busbar frame may include a busbar seating groove for seating a busbar between the lead part through-slots at the front part of the busbar frame.

In some embodiments, a busbar is seated in a busbar seating groove provided in the busbar frame, lead parts that have passed through the busbar frame are stacked two by two, the stacked lead parts are in contact with a front part of the seated busbar, and a fixing member may be attached to a front part of the stacked lead parts that are in contact with the front part of the busbar, so that the busbar and the stacked lead parts are brought into contact and fixed to each other.

In some embodiments, the first-type protruding part may be provided with a thermal barrier member insertion groove into which the thermal barrier member provided between the plurality of pouch-type cells of the cell stack assembly is inserted.

In some embodiments, the cell stack assembly further includes an upper edge folded part formed by folding a packaging material protruding from an upper part of the plurality of pouch-type cells, and the busbar frame may be configured such that a length of the second-type protruding part is shorter than a length of the first-type protruding part so as to accommodate the upper edge folded part of the pouch-type cells, and a stepped part is provided on an upper part of the second-type protruding part.

In some embodiments, the busbar frame may have a thermal insulation member attached to the rear part comprising the protruding part.

In some embodiments, the thermal insulation member may include a thermal insulation member protruding part and a thermal insulation member recess part so as to be fit-coupled with the protruding part provided on the rear part of the busbar frame.

In some embodiments, the thermal insulation member protruding part may include: a first-type thermal insulation member protruding part corresponding to the first-type protruding part; and a second-type thermal insulation member protruding part corresponding to the second-type protruding part.

In some embodiments, the first-type thermal insulation member protruding part may include a thermal barrier member insertion groove corresponding part, which corresponds to the thermal barrier member insertion groove, so that the thermal barrier member can be inserted into the thermal barrier member insertion groove.

In some embodiments, the thermal insulation member recess part may include a lead part through-slot corresponding part, which corresponds to the lead part through-slot, so that the lead part of the cell stack assembly is inserted into the lead part through-slot.

In order to achieve the second technical object, the present disclosure provides a method for manufacturing a battery cell unit, including: a lead part penetration step of passing a lead part of a cell stack assembly provided with a plurality of pouch-type cells through a lead part through-slot provided in a busbar frame; and a lead part folding step of seating a busbar in a busbar seating groove provided in the busbar frame, then folding the lead parts that have passed through the busbar frame two by two, and stacking them on top of each other so as to bring them into contact with a front part of the seated busbar.

In some embodiments, the method for manufacturing a battery cell unit may further include a fixing member attaching step of attaching a fixing member to a front part of the stacked lead parts to bring the busbar and the stacked lead parts into contact and to fix them to each other.

In some embodiments, in the lead part penetration step, the busbar frame includes a protruding part on a rear part thereof, and the protruding part may be inserted into a terrace part of the cell stack assembly.

### [Advantageous Effects]

The battery cell unit according to the embodiments of the present disclosure has an effect of delaying thermal runaway or thermal propagation.

The effects obtainable from the exemplary embodiments of the present disclosure are not limited to the effects mentioned above, and other effects not mentioned may be clearly derived and understood by those skilled in the art to which the exemplary embodiments of the present disclosure pertain from the following description. That is, unintended effects resulting from the implementation of the exemplary embodiments of the present disclosure may also be derived by those skilled in the art from the exemplary embodiments of the present disclosure.

### [Brief Description of the Drawings]

FIG. 1 is a view illustrating a battery cell unit according to an exemplary embodiment of the present disclosure.
FIG. 2 is an enlarged view illustrating a busbar frame of the battery cell unit according to an exemplary embodiment of the present disclosure.
FIG. 2a is an enlarged view of portion A1 of FIG. 2.
FIG. 3 is an exploded view of the battery cell unit according to an exemplary embodiment of the present disclosure.
FIG. 3a is an enlarged view of portion A2 of FIG. 3.
FIG. 4 is a view illustrating a process in which lead parts of a cell stack assembly are assembled to the busbar frame of the battery cell unit according to an exemplary embodiment of the present disclosure.
FIG. 5 is a front perspective view of the busbar frame of the battery cell unit according to an exemplary embodiment of the present disclosure.
FIG. 5a is an enlarged view of portion A3 of FIG. 5.
FIG. 6 is a rear perspective view of the busbar frame of the battery cell unit according to an exemplary embodiment of the present disclosure.
FIG. 6a is an enlarged view of portion A4 of FIG. 6.
FIG. 7 is a plan view of the busbar frame of the battery cell unit according to an exemplary embodiment of the present disclosure.
FIG. 7a is an enlarged view of portion A5 of FIG. 7.
FIG. 8 is a view illustrating a front part of the busbar frame of the battery cell unit according to an exemplary embodiment of the present disclosure.
FIG. 9 is a plan view of the busbar frame to which a thermal insulation member is attached in the battery cell unit according to an exemplary embodiment of the present disclosure.
FIG. 9a is an enlarged view of portion A6 of FIG. 9.
FIG. 10 is a front perspective view illustrating the thermal insulation member disassembled from the busbar frame of the battery cell unit according to an exemplary embodiment of the present disclosure.
FIG. 10a is an enlarged view of portion A7 of FIG. 10.
FIG. 11 is a rear perspective view illustrating the thermal insulation member disassembled from the busbar frame of the battery cell unit according to an exemplary embodiment of the present disclosure.
FIG. 11a is an enlarged view of portion A8 of FIG. 11.
FIG. 12 is a view illustrating a method for manufacturing a battery cell unit according to an exemplary embodiment of the present disclosure.

### [Best Mode for Carrying Out the Invention]

Hereinafter, preferred embodiments of the inventive concept will be described in detail with reference to the accompanying drawings. However, the embodiments of the inventive concept may be modified into various different forms, and the scope of the inventive concept should not be construed as being limited to the embodiments described below. The embodiments of the inventive concept are provided to more completely explain the inventive concept to those of ordinary skill in the art. Like reference numerals denote like elements throughout. Furthermore, various elements and regions in the drawings are schematically drawn. Accordingly, the inventive concept is not limited by the relative sizes or spacings drawn in the accompanying drawings.

Although terms such as "first" and "second" may be used to describe various components, the components are not limited by these terms. These terms are only used for the purpose of distinguishing one component from another. For example, without departing from the scope of the inventive concept, a first component may be referred to as a second component, and conversely, a second component may be referred to as a first component.

The terminology used herein is only used to describe specific embodiments and is not intended to limit the inventive concept. Singular expressions include plural expressions unless the context clearly indicates otherwise. In this application, expressions such as "include" or "have" are intended to designate the presence of features, numbers, steps, operations, components, parts, or combinations thereof described in the specification, but do not preclude the presence or addition of one or more other features, numbers, operations, components, parts, or combinations thereof.

Unless otherwise defined, all terms used herein, including technical and scientific terms, have the same meaning as commonly understood by those of ordinary skill in the art to which the inventive concept pertains. In addition, terms commonly used and defined in dictionaries should be interpreted as having meanings consistent with their meanings in the context of the relevant art, and should not be interpreted in an overly formal sense unless expressly defined herein.

If an embodiment can be instantiated differently, a specific process order may be performed differently from the order described. For example, two processes described in succession may be performed substantially simultaneously, or may be performed in an order opposite to the order described.

In the accompanying drawings, for example, variations in the illustrated shapes may be expected depending on manufacturing techniques and/or tolerances. Accordingly, the embodiments of the present disclosure should not be construed as being limited to the specific shapes of the regions illustrated herein, but should include, for example, variations in shapes caused during the manufacturing process. The term "and/or" used herein includes each of the mentioned components and all combinations of one or more thereof. In addition, the term "substrate" used herein may mean the substrate itself, or a laminated structure including the substrate and a predetermined layer or film formed on the surface thereof. In addition, the term "surface of the substrate" as used herein may mean an exposed surface of the substrate itself, or an outer surface of a predetermined layer or film formed on the substrate.

### (First Embodiment)

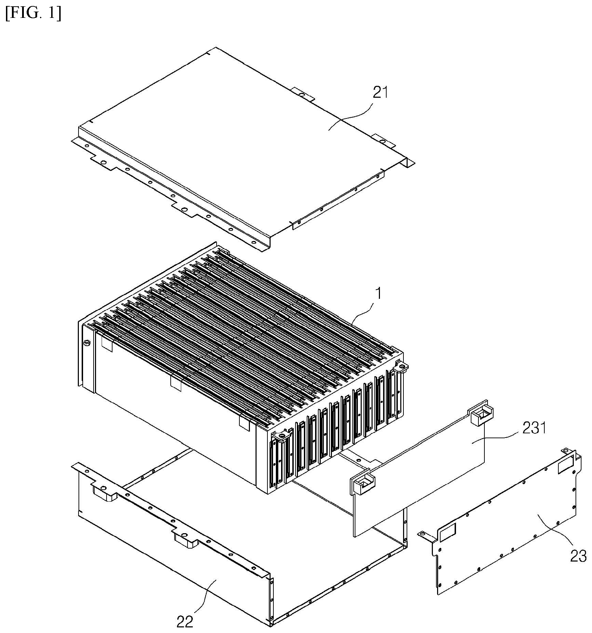

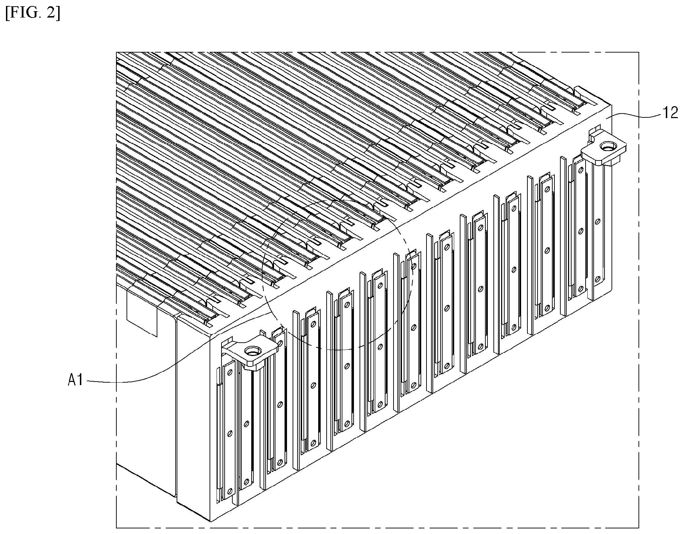

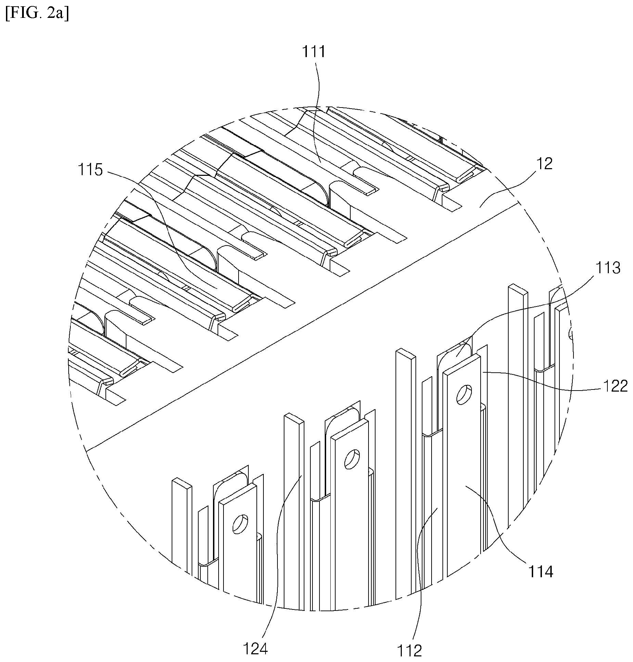

FIG. 1 is a view illustrating a battery cell unit 1 according to an exemplary embodiment of the present disclosure, FIG. 2 is an enlarged view illustrating a busbar frame 12 of the battery cell unit 1 according to an exemplary embodiment of the present disclosure, and FIG. 2a is an enlarged view of portion A1 of FIG. 2.

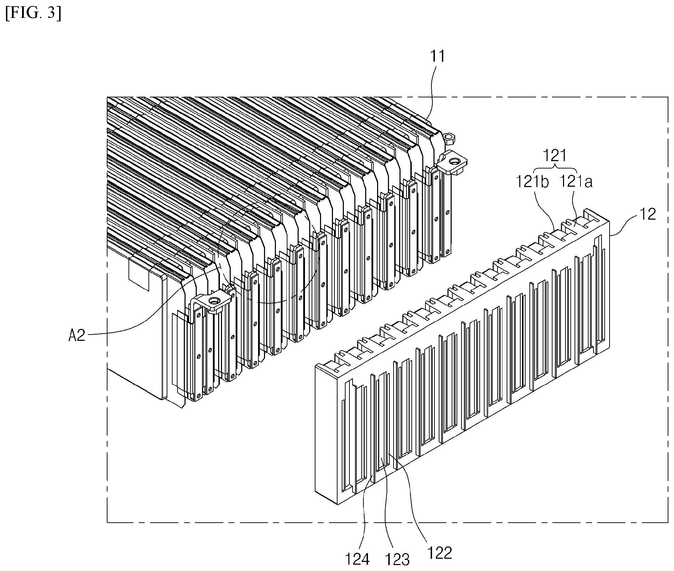

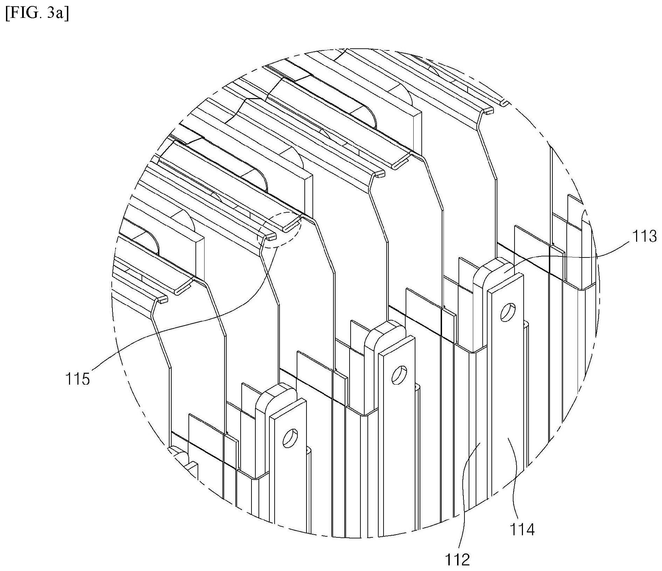

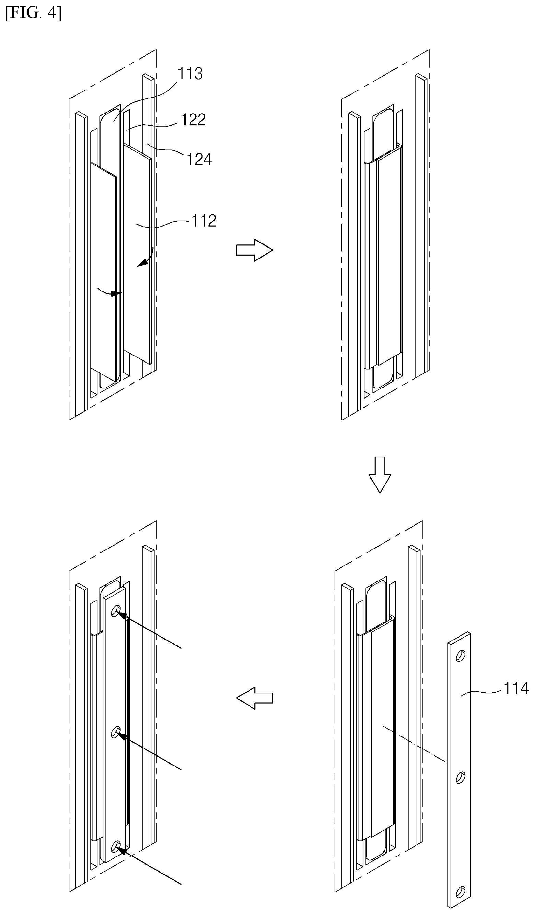

FIG. 3 is an exploded view of the battery cell unit 1 according to an exemplary embodiment of the present disclosure, FIG. 3a is an enlarged view of portion A2 of FIG. 3, and FIG. 4 is a view illustrating a process in which lead parts 112 of a cell stack assembly are assembled to the busbar frame 12 of the battery cell unit 1 according to an exemplary embodiment of the present disclosure.

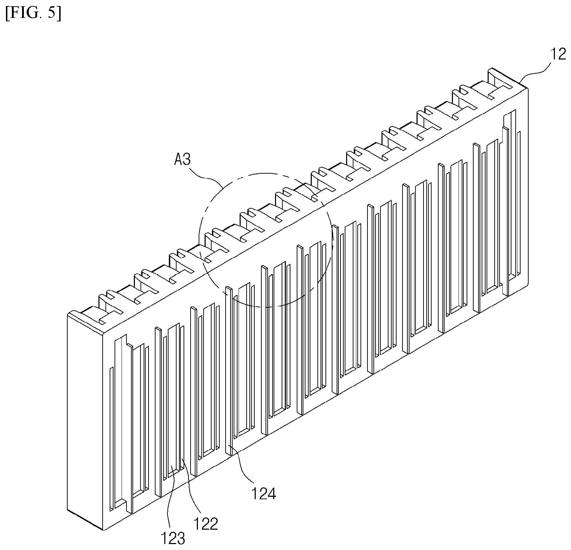

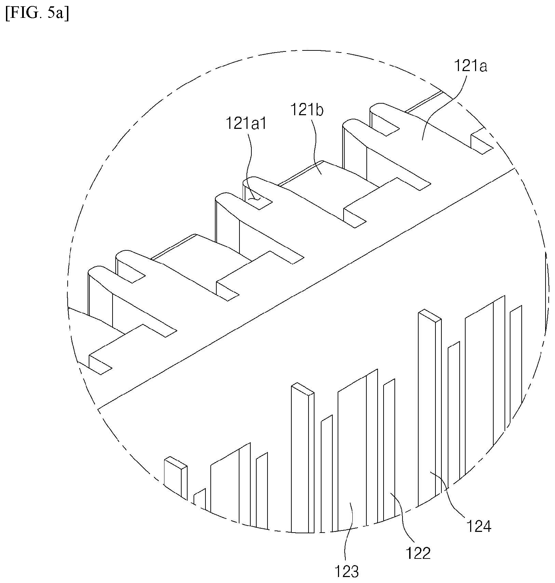

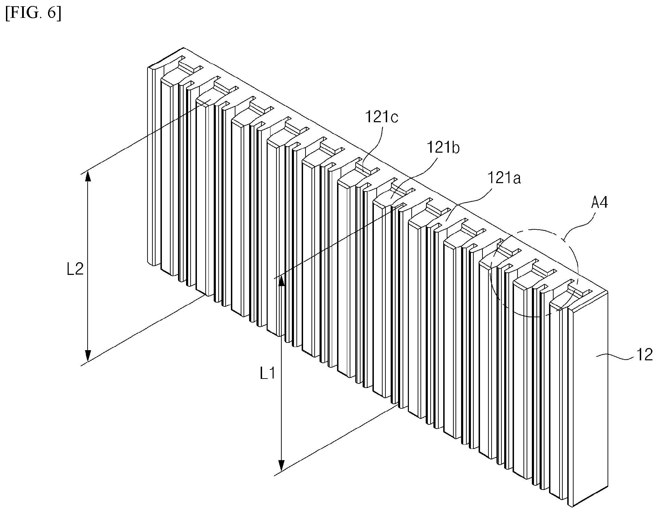

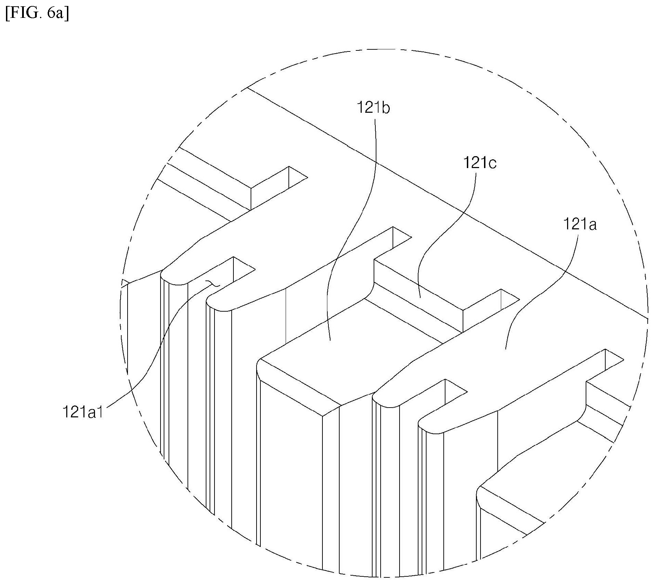

FIG. 5 is a front perspective view of the busbar frame 12 of the battery cell unit 1 according to an exemplary embodiment of the present disclosure, FIG. 5a is an enlarged view of portion A3 of FIG. 5, FIG. 6 is a rear perspective view of the busbar frame 12 of the battery cell unit 1 according to an exemplary embodiment of the present disclosure, and FIG. 6a is an enlarged view of portion A4 of FIG. 6.

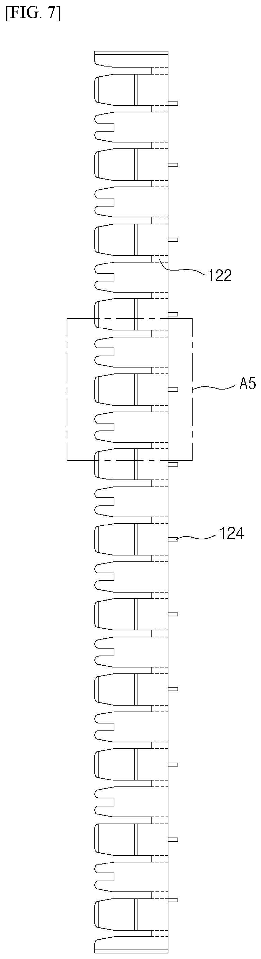

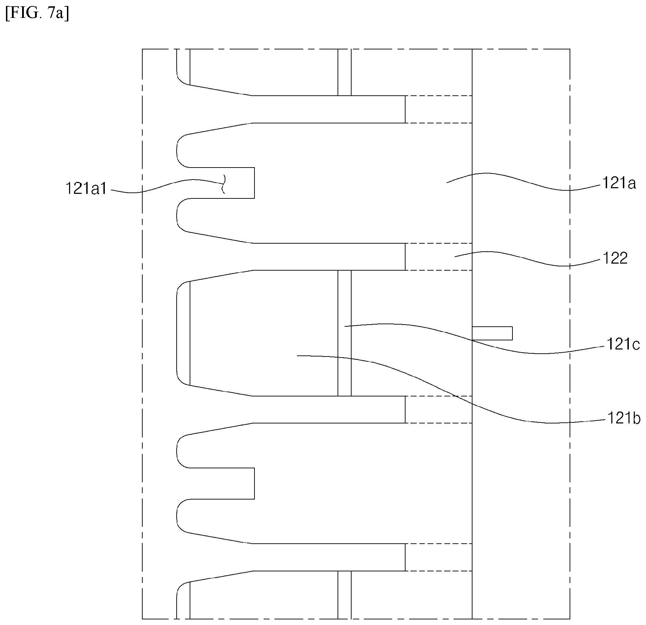

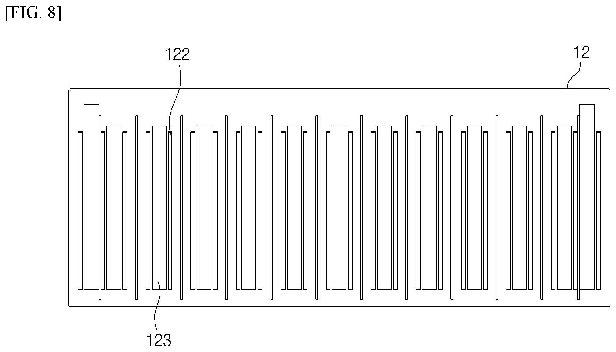

FIG. 7 is a plan view of the busbar frame 12 of the battery cell unit 1 according to an exemplary embodiment of the present disclosure, FIG. 7a is an enlarged view of portion A5 of FIG. 7, and FIG. 8 is a view illustrating a front part of the busbar frame 12 of the battery cell unit 1 according to an exemplary embodiment of the present disclosure.

Referring to FIGS. 1 to 8, a battery cell unit 1 according to an embodiment of the present disclosure may include a cell stack assembly 11 and a busbar frame 12.

The battery cell unit 1 may be accommodated in an outer housing.

The battery cell unit 1 may be accommodated in the outer housing to function as a battery module.

The outer housing may include an outer housing upper surface cover 21, an outer housing lower housing 22, and an outer housing side plate 23.

The outer housing side plate 23 may be disposed between the battery cell unit 1 and the outer housing side plate 23.

By disposing the outer housing side plate 23, thermal propagation can be delayed.

The cell stack assembly 11 includes a plurality of pouch-type cells stacked on top of each other, and a thermal barrier member 111 may be provided in all or part of the spaces between the plurality of pouch-type cells.

The busbar frame 12 may include a protruding part 121 on a rear part thereof.

The protruding part 121 may be inserted into a terrace part space formed in the terrace part of the cell stack assembly 11.

The busbar frame 12 may be a frame that binds and fixes a cell lead part 112 and a busbar 113.

Since the protruding part 121 is inserted into the terrace part space formed in the terrace part of the cell stack assembly 11, pressure is applied to the terrace part, which is relatively vulnerable to thermal runaway or thermal propagation compared to other portions, so that thermal runaway or thermal propagation can be delayed.

In some embodiments, the protruding part 121 may include a first-type protruding part 121a and a second-type protruding part 121b adjacent to the first-type protruding part 121a and having a different shape from the first-type protruding part 121a.

In some embodiments, the busbar frame 12 may include a lead part through-slot 122 penetrating from the rear part toward the front portion of the busbar frame 12 between the first-type protruding part 121a and the second-type protruding part 121b, such that the lead part 112 of the cell stack assembly passes therethrough.

In some embodiments, the busbar frame 12 may include a busbar seating groove 123 for seating the busbar 113 between the lead part through-slots 122 at the front part of the busbar frame 12.

The busbar 113 may be seated in the busbar seating groove 123 and coupled and fixed to the busbar seating groove 123.

The busbar 113 and the busbar seating groove 123 may be screw-coupled or adhered to each other.

After the lead part 112 of the cell stack assembly passes through the lead part through-slot 122, it may be assembled with the busbar 113 seated in the busbar seating groove 123 of the busbar frame 12.

In some embodiments, the busbar 113 may be seated in the busbar seating groove 123 provided in the busbar frame 12, the lead parts 112 that have passed through the busbar frame 12 may be stacked two by two, the stacked lead parts 112 may be brought into contact with a front part of the seated busbar 113, and a fixing member 114 may be attached to a front part of the stacked lead parts 112 that are in contact with the front part of the busbar 113, thereby bringing the busbar 113 and the stacked lead parts 112 into contact and fixing them to each other.

In some embodiments, when the two lead part through-slots 122 and the busbar seating groove 123 located between the two lead part through-slots 122 at the front part of the busbar frame 12 are viewed as one unit, the busbar frame 12 may include a partition member so as to be separated from other units in terms of area.

Due to the partition member, thermal runaway or thermal propagation can be delayed.

In some embodiments, the first-type protruding part 121a may be provided with a thermal barrier member insertion groove 121a1 into which the thermal barrier member 111 provided between the plurality of pouch-type cells of the cell stack assembly 11 is inserted.

The thermal barrier member 111 may be inserted into the thermal barrier member insertion groove 121a1 to fix the thermal barrier member 111.

In some embodiments, the cell stack assembly 11 may further include an upper edge folded part 115 formed by folding a packaging material protruding from the upper part of the plurality of pouch-type cells, and the busbar frame 12 may be configured such that a length L2 of the second-type protruding part is shorter than a length of the first-type protruding part 121a so as to accommodate the upper edge folded part 115 of the pouch-type cells, and a stepped part 121c is provided on an upper part of the second-type protruding part 121b.

The upper edge folded part 115 is accommodated in the busbar frame 12, so that the busbar frame 12 can be easily inserted into the terrace part space formed in the terrace part of the cell stack assembly 11.

The stepped part 121c may be formed as the length L2 of the second-type protruding part becomes shorter in the busbar frame 12.

In some embodiments, the busbar frame 12 may have a thermal insulation member 13 attached to the rear part including the protruding part 121.

By attaching the thermal insulation member 13 to the busbar frame 12, thermal runaway or thermal propagation can be delayed.

### (Second Embodiment)

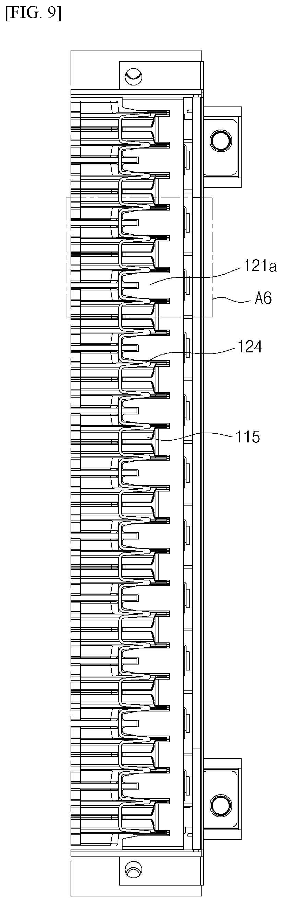

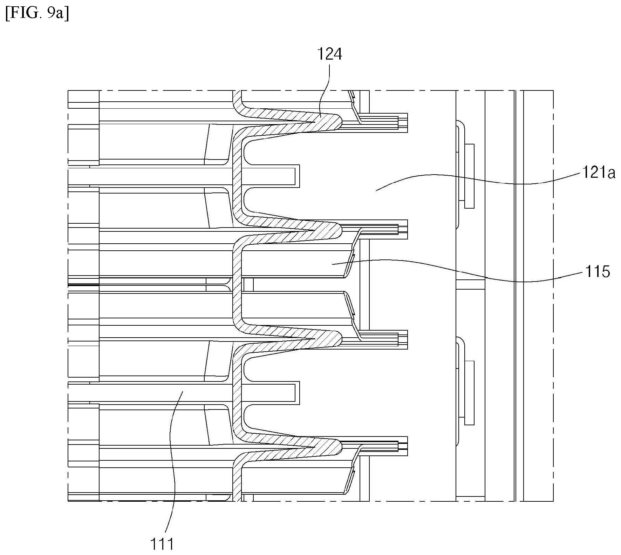

FIG. 9 is a plan view of the busbar frame 12 to which a thermal insulation member 13 is attached in the battery cell unit 1 according to an exemplary embodiment of the present disclosure, and FIG. 9a is an enlarged view of portion A6 of FIG. 9.

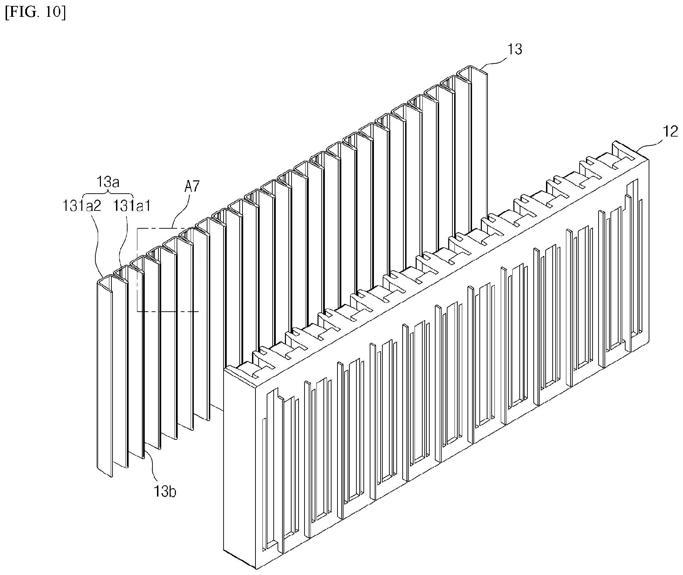

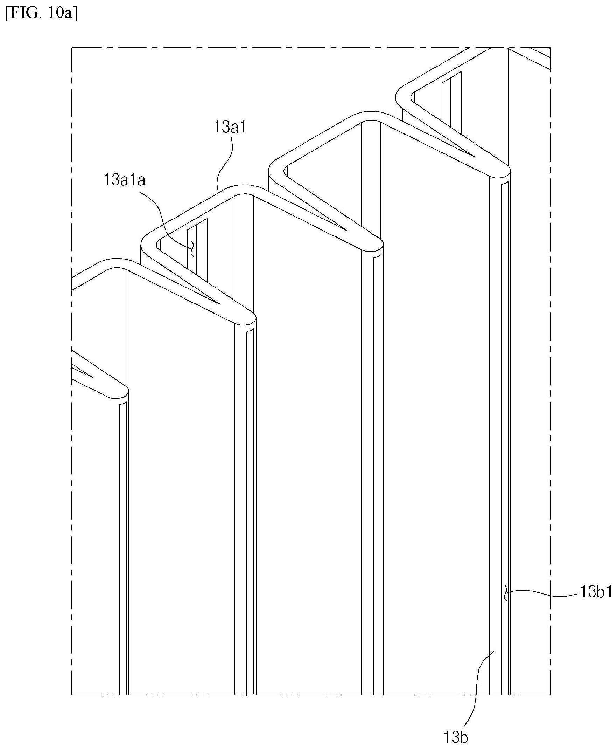

FIG. 10 is a front perspective view illustrating the thermal insulation member 13 disassembled from the busbar frame 12 of the battery cell unit 1 according to an exemplary embodiment of the present disclosure, and FIG. 10a is an enlarged view of portion A7 of FIG. 10.

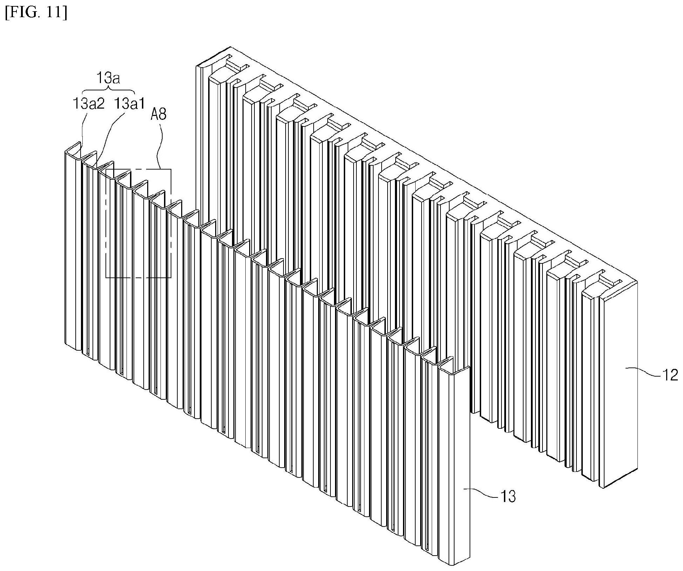

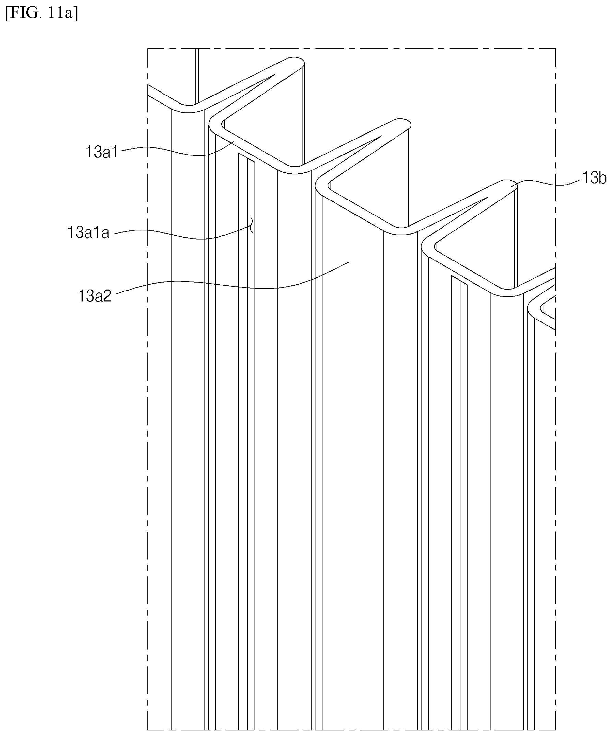

FIG. 11 is a rear perspective view illustrating the thermal insulation member 13 disassembled from the busbar frame 12 of the battery cell unit 1 according to an exemplary embodiment of the present disclosure, and FIG. 11a is an enlarged view of portion A8 of FIG. 11.

Referring to FIGS. 9 to 11, in some embodiments, the thermal insulation member 13 may include a thermal insulation member protruding part 13a and a thermal insulation member recess part 13b so as to be fit-coupled with the protruding part 121 provided on the rear part of the busbar frame 12.

Due to the thermal insulation member 13, thermal runaway or thermal propagation can be delayed.

In some embodiments, the thermal insulation member protruding part 13a may include: a first-type thermal insulation member protruding part 13a1 corresponding to the first-type protruding part 121a; and a second-type thermal insulation member protruding part 13a2 corresponding to the second-type protruding part 121b.

The first-type thermal insulation member protruding part 13a1 may be in contact with the first-type protruding part 121a.

The second-type thermal insulation member protruding part 13a2 may be in contact with the second-type protruding part 121b.

In some embodiments, the first-type thermal insulation member protruding part 13a1 may include a thermal barrier member insertion groove corresponding part 13a1a, which corresponds to the thermal barrier member insertion groove 121a1, so that the thermal barrier member 111 can be inserted into the thermal barrier member insertion groove 121a1.

In some embodiments, the thermal insulation member recess part 13b may include a lead part through-slot corresponding part 13b1, which corresponds to the lead part through-slot 122, so that the lead part 112 of the cell stack assembly is inserted into the lead part through-slot 122.

### (Third Embodiment)

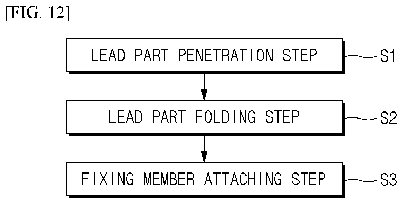

FIG. 12 is a view illustrating a method for manufacturing a battery cell unit according to an exemplary embodiment of the present disclosure.

Referring to FIG. 12, a method for manufacturing a battery cell unit according to an embodiment of the present disclosure may include a lead part penetration step S1 and a lead part folding step S2.

In the lead part penetration step S1, the lead part 112 of the cell stack assembly 11 including a plurality of pouch-type cells may be passed through the lead part through-slot 122 provided in the busbar frame 12.

In the lead part folding step S2, after seating the busbar 113 in the busbar seating groove 123 provided in the busbar frame 12, the lead parts 112 that have passed through may be folded two by two and stacked on top of each other so as to be in contact with a front part of the seated busbar 113.

In some embodiments, the method for manufacturing a battery cell unit may further include a fixing member attaching step S3 of attaching a fixing member 114 to a front portion of the stacked lead parts 112 to bring the busbar 113 and the stacked lead parts 112 into contact and fix them to each other.

The fixing member 114 may be attached to the front portion of the lead part 112 by screw coupling, welding, or the like.

In some embodiments, in the lead part penetration step S1, the busbar frame 12 may include the protruding part 121 on a rear part thereof, and the protruding part 121 may be inserted into the terrace part of the cell stack assembly 11.

Although the embodiments of the present disclosure have been described in detail above, those of ordinary skill in the art to which the present disclosure pertains may implement the present disclosure with various modifications without departing from the spirit and scope of the present disclosure defined in the appended claims. Therefore, future modifications of the embodiments of the present disclosure will not depart from the technology of the present disclosure.

## Claims

1. A battery cell unit comprising:
a cell stack assembly comprising a plurality of pouch-type cells stacked on top of each other, wherein a thermal barrier member is provided in all or part of spaces between the plurality of pouch-type cells; and
a busbar frame comprising a protruding part on a rear part thereof, wherein
the protruding part is inserted into a terrace part of the cell stack assembly.

2. The battery cell unit of claim 1, wherein
the protruding part comprises a first-type protruding part and a second-type protruding part adjacent to the first-type protruding part and having a different shape from the first-type protruding part.

3. The battery cell unit of claim 2, further comprising:
a lead part through-slot penetrating from a rear part toward a front part of the busbar frame between the first-type protruding part and the second-type protruding part such that a lead part of the cell stack assembly penetrates.

4. The battery cell unit of claim 3, wherein
the busbar frame comprises a busbar seating groove for seating a busbar between the lead part through-slots at the front part of the busbar frame.

5. The battery cell unit of claim 1, wherein
a busbar is seated in a busbar seating groove provided in the busbar frame,
lead parts that have passed through the busbar frame are stacked two by two,
the stacked lead parts are in contact with a front part of the seated busbar, and
a fixing member is attached to a front part of the stacked lead parts that are in contact with the front part of the busbar, so that the busbar and the stacked lead parts are brought into contact and fixed to each other.

6. The battery cell unit of claim 2, wherein
the first-type protruding part is provided with a thermal barrier member insertion groove into which the thermal barrier member provided between the plurality of pouch-type cells of the cell stack assembly is inserted.

7. The battery cell unit of claim 2, wherein
the cell stack assembly further comprises an upper edge folded part formed by folding a packaging material protruding from an upper part of the plurality of pouch-type cells, and
the busbar frame is configured such that a length of the second-type protruding part is shorter than a length of the first-type protruding part so as to accommodate the upper edge folded part of the pouch-type cells, and a stepped part is provided on an upper part of the second-type protruding part.

8. The battery cell unit of claim 3, wherein
the busbar frame has a thermal insulation member attached to the rear part comprising the protruding part.

9. The battery cell unit of claim 8, wherein
the thermal insulation member comprises a thermal insulation member protruding part and a thermal insulation member recess part so as to be fit-coupled with the protruding part provided on the rear part of the busbar frame.

10. The battery cell unit of claim 9, wherein
the thermal insulation member protruding part comprises:
a first-type thermal insulation member protruding part corresponding to the first-type protruding part; and
a second-type thermal insulation member protruding part corresponding to the second-type protruding part.

11. The battery cell unit of claim 10, wherein
the first-type thermal insulation member protruding part comprises a thermal barrier member insertion groove corresponding part, which corresponds to a thermal barrier member insertion groove, so that the thermal barrier member can be inserted into the thermal barrier member insertion groove.

12. The battery cell unit of claim 9, wherein
the thermal insulation member recess part comprises a lead part through-slot corresponding part, which corresponds to the lead part through-slot, so that the lead part of the cell stack assembly is inserted into the lead part through-slot.

13. A method for manufacturing a battery cell unit comprising:
a lead part penetration step of passing a lead part of a cell stack assembly provided with a plurality of pouch-type cells through a lead part through-slot provided in a busbar frame; and
a lead part folding step of seating a busbar in a busbar seating groove provided in the busbar frame, then folding the lead parts that have passed through the busbar frame two by two, and stacking them on top of each other so as to bring them into contact with a front part of the seated busbar.

14. The method for manufacturing a battery cell unit of claim 13, further comprising:
a fixing member attaching step of attaching a fixing member to a front part of the stacked lead parts to bring the busbar and the stacked lead parts into contact and to fix them to each other.

15. The method for manufacturing a battery cell unit of claim 13, wherein
in the lead part penetration step, the busbar frame comprises a protruding part on a rear part thereof, and
the protruding part is inserted into a terrace part of the cell stack assembly.
